Europäisches Patentamt

(19) European Patent Office

Office européen des brevets

(11) Publication number: **0 126 223**
A2

## (12) EUROPEAN PATENT APPLICATION

(21) Application number: **84102116.5**

(22) Date of filing: **29.02.84**

(51) Int. Cl.³: **G 01 D 5/32**

(30) Priority: **23.05.83 US 496862**

(43) Date of publication of application: **28.11.84**
**Bulletin 84/48**

(84) Designated Contracting States: **DE FR GB**

(71) Applicant: **TRW INC., 23555 Euclid Avenue, Cleveland Ohio 44117 (US)**

(72) Inventor: **Phillips, Oliver Austin, 7339 South Marina Pacifica Drive, Long Beach California 90803 (US)**

(74) Representative: **Leiser, Gottfried, Dipl.-Ing. et al, Patentanwälte Prinz, Leiser, Bunke & Partner Ernsberger Strasse 19, D-8000 München 60 (DE)**

(54) Control apparatus.

(57) An improved control apparatus includes a manually actuatable control member or joystick which is movable from an initial position about a plurality of transversely extending axes to any one of a plurality of actuated positions. A separate optical attenuator is provided for each axis of movement of the joystick. Each of the optical attenuators includes a pair of optical fibers. Upon movement of the joystick about an axis, one optical fiber of the pair of optical fibers is deformed to thereby reduce the intensity of a light signal transmitted through the optical fiber. The extent of deformation of the optical fiber and reduction in the intensity of the light signal increases as the distance which the joystick moves from an initial position increases.

## CONTROL APPARATUS

### Background of the Invention

The present invention relates to a new and improved control apparatus having a single control member which is movable to control a plurality of functions.

Insulated aerial platforms are used during the maintenance and repair of high voltage transmission lines. The hazards encountered while working around high voltages at high elevations have imposed rather severe requirements on the apparatus for controlling the position of the platform. Not only must the control apparatus enable an operator to smoothly and accurately position the platform, the control apparatus must also insulate the operator from ground to prevent electrocution. Since emergency repairs are often required during severe thunderstorms, blizzards and windstorms, the control apparatus must perform its functions reliably in severe environmental conditions.

An operator on the platform actuates the controls to position the platform. There are three primary positioning functions common to insulated aerial platforms. These functions are up-down, forward-backward, and left-right. Hydraulic controls have previously been used to position the platforms. In addition, U.S. Patent No. 4,044,856 discloses an aerial platform control apparatus having three separate control levers for actuating light guides or optical fibers to control the position of a platform.

## Summary of the Present Invention

The present invention provides a new and improved control apparatus which, although it may be used in many different environments, is particularly well adapted to control movement of an aerial platform. The control apparatus includes a plurality of optical attenuators which are actuated by movement of a single control member. The control member is movable about a plurality of axes.

Each of the optical attenuators is operable to deform one optical fiber of a pair of optical fibers. Upon movement of the control member about one of the axes, one of the optical attenuators is actuated to deform an optical fiber. Deformation of an optical fiber impedes the transmission of light through the optical fiber to provide a control signal which is used to effect the desired movement of the aerial platform. Upon movement of the control member about another axis, a second optical attenuator is actuated to deform another optical fiber and effect a different control function.

A single interlock member is engageable to prevent pivotal movement of the control member. Engagement of the interlock member also prevents rotation of the control member about its own central axis.

Accordingly, it is an object of this invention to provide a new and improved control apparatus in which an attenuator impedes the transmission of light through a first optical fiber upon movement of a control member about a first axis and impedes the transmission of light through a second optical fiber upon movement of the control member about a second axis.

Another object of this invention is to provide a new and improved control apparatus in which an attenuator deforms a first optical fiber upon movement of a control member in a first direction and deforms a second optical fiber upon movement of a control member in a second direction.

Another object of this invention is to provide a new and improved control apparatus in which movement of a control member about a first axis actuates a first attenuator to deform an optical fiber in a first pair of optical fibers and in which movement of the control member about a second axis actuates a second attenuator to deform an optical fiber in a second pair of optical fibers.

Another object of this invention is to provide a new and improved apparatus in which a single locking member is provided to hold a control member against movement about a plurality of axes.

## Brief Description of the Drawings

The foregoing and other objects and features of the present invention will become more apparent upon a consideration of the following description taken in connection with the accompanying drawings wherein:

Fig. 1 is a schematic illustration of a vehicle mounted aerial platform;

Fig. 2 is a schematic illustration of controls for the aerial platform of Fig. 1;

Fig. 3 is a fragmentary exploded illustration depicting the relationship between a control member and a plurality of optical attenuators in the controls of Fig. 2;

Fig. 4 is a schematic illustration depicting the relationship between an arm of an optical attenuator and a pair of optical fibers prior to movement of the control member of Fig. 3;

Fig. 5 is a schematic illustration, generally similar to Fig. 4, depicting deformation of one of the optical

0126223

fibers by the attenuator arm upon movement of the control member;

Fig. 6 is a fragmentary illustration depicting the construction of the control member and its relationship to an arm of one of the optical attenuators;

Fig. 7 is a fragmentary sectional view, taken generally along the line 7-7 of Fig. 6;

Fig. 8 (on sheet three of the drawings) is an enlarged fragmentary illustration of an interlock mechanism for the control member of Fig. 6, the interlock mechanism being shown in a release condition;

Fig. 9 is a fragmentary view, generally similar to Fig. 8, illustrating the interlock mechanism in a locking condition; and

Fig. 10 is a fragmentary exploded illustration depicting a mounting arrangement for the control apparatus of Fig. 3.

<div align="center">

Description of One Specific
Preferred Embodiment of the Invention

</div>

General Description

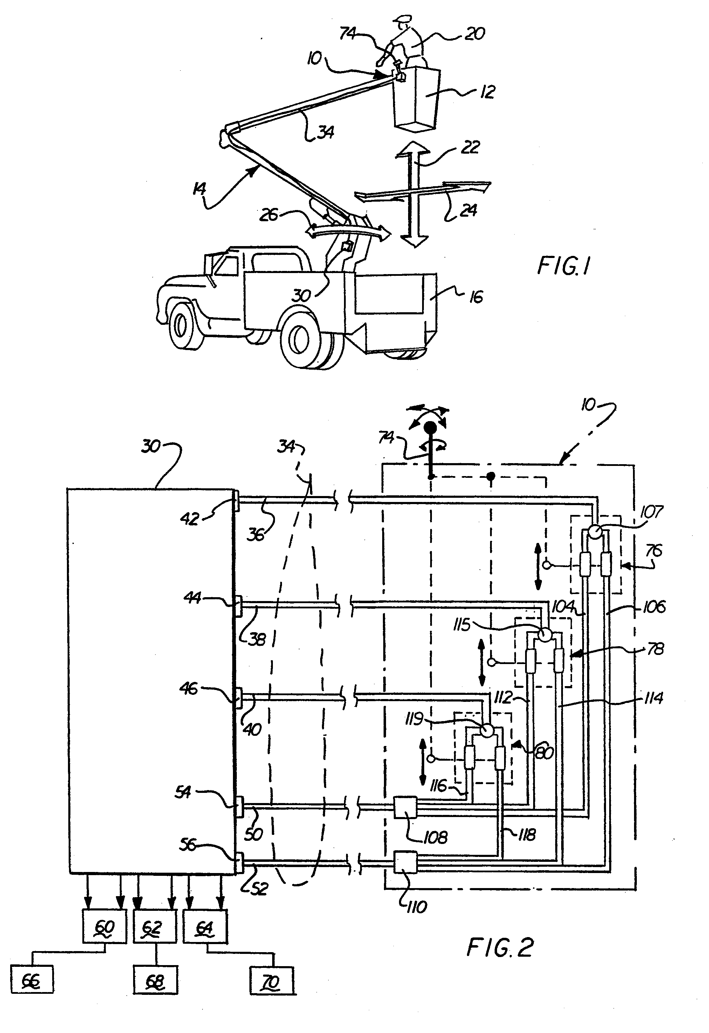

Although a control assembly 10 constructed in accordance with the present invention can be used in conjunction with many different devices, the control assembly is illustrated in Fig. 1 in association with an insulated aerial platform 12. The insulated aerial platform 12 is connected to one end of a boom 14. The opposite end of the boom 14 is connected to a truck 16.

An operator 20 actuates the control assembly 10 to cause the aerial platform 12 to move up or down in the manner indicated by the arrow 22 in Fig. 1. In addition, the control assembly 10 can be actuated to cause the aerial platform 12 to move forward or backward in the manner indicated by the arrow 24 in Fig. 1. The control assembly 10 can also be actuated to cause the boom 14 to pivot either to the right or left as indicated by the arrow 26 in Fig. 1.

The control assembly 10 is connected with a microprocessor 30 which is mounted on the boom 14. The microprocessor 30 is connected with the control assembly 10 by a fiber optic cable 34. The fiber optic cable 34 contains three transmit optical fibers 36, 38 and 40 (Fig. 2) which conduct light from diodes 42, 44 and 46 to the control assembly 10. In addition, the fiber optic cable 34 includes a pair of return optical fibers 50 and 52 which conduct light from the control assembly 10 to light sensitive photodiodes 54 and 56.

The microprocessor 30 time division multiplexes light signals conducted through the transmit optical fibers 36, 38 and 40 to the return optical fibers 50 and 52. In response to light signals conducted through the return optical fibers 50 and 52, the microprocessor 30 effects operation of one or more of a plurality of valves 60, 62 and 64 in accordance with actuation of the control assembly 10. The valves 60, 62 and 64 are operable to actuate one or more of a plurality of hydraulic motors 66, 68 and 70. Actuation of the motors 66, 68 and 70 moves the aerial platform 12 in the manner indicated schematically by the arrows 22, 24 and 26 in Fig. 1.

Upon actuation of the control assembly 10 to effect movement of the aerial platform 12 either up or down in the manner indicated by the arrow 22, a signal conducted over one of the return optical fibers 50 or 52 causes the microprocessor 30 to actuate the valve 60. Actuation of the valve 60 directs fluid to the motor 66 to effect the desired movement of the aerial platform 12. Similarly, upon actuation of the control 10 to move the aerial platform 12 either forward or backward, a signal conducted through one of the optical fibers 50 or 52 causes the microprocessor 30 to effect actuation of the valve 62 to operate a motor 68 to move the platform in one of the directions indicated by the arrow 24. In addition, actuation of the controls 10 to swing the platform 12 toward either the right or left results in a signal being transmitted over one of the optical fibers 50 or 52 to cause the microprocessor 30 to actuate the valve 64 to operate the motor 70 and pivot the boom 14 relative to the truck 16 in one of the directions indicated by the arrow 26 in Fig. 1.

Although the foregoing description has assumed that only one control function is to be initiated at a time, the control assembly 10 can be actuated to simultaneously initiate a plurality of control functions. For example, the control assembly 10 could be actuated to simultaneously lower the aerial platform 12, move the platform backward, and move the platform sideways.

## Control Assembly

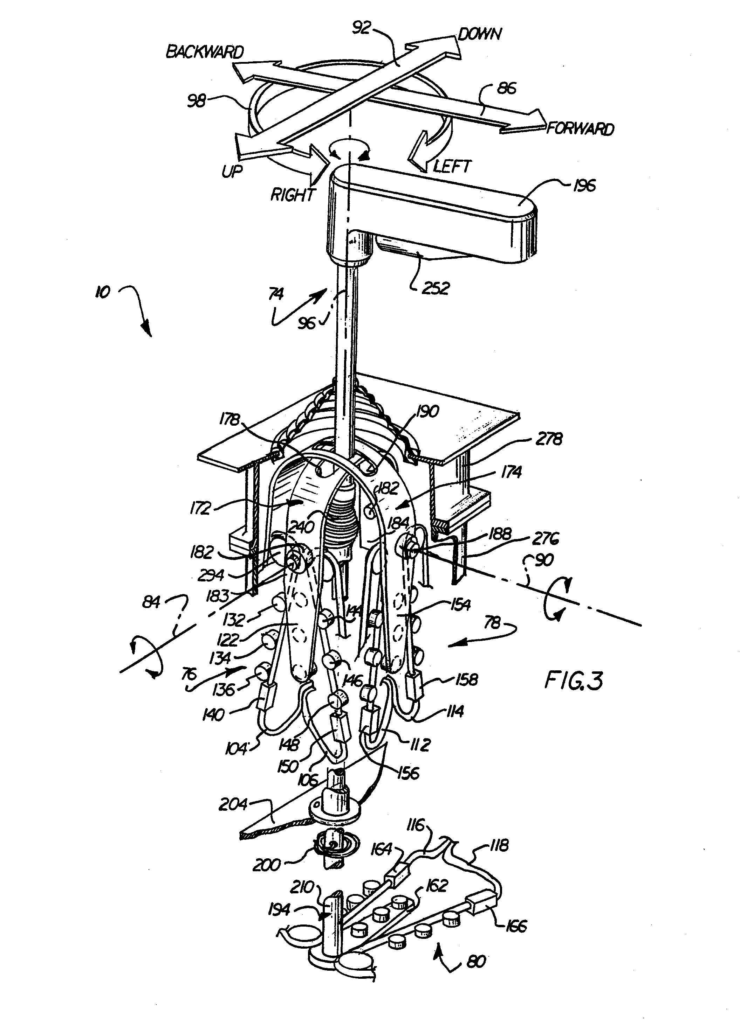

. In accordance with a feature of the present invention, the control assembly 10 (Figs. 2 and 3) includes a single control lever or member 74. The manually actuatable control lever 74 is movable to control the three positioning functions of the aerial platform 12, that is the up-down, forward-backward and left-right positioning functions. To control these functions, a plurality of optical attenuators 76, 78 and 80 are connected with the control lever 74.

When the aerial platform 12 is to be moved forward or backward, as indicated by the arrow 24 in Fig. 1, the control lever 74 is pivoted about the X axis 84, as indicated by the arrow 86 in Fig. 3. Thus, when the aerial platform 12 is to be moved backward, that is toward the right as viewed in Fig. 1, the control lever 74 is pivoted in a counterclockwise direction (as viewed in Fig. 3) about the X axis 84. Similarly, when the aerial platform 12 is to be moved forward, that is toward the left as viewed in Fig. 1, the control lever 74 is pivoted in a clockwise direction about the X axis 84. Pivotal movement of the control lever 74 about the X axis 84 actuates the X axis attenuator 76 to provide a control signal to the microprocessor 30 (see Fig. 2).

When the aerial platform 12 is to be raised or lowered, as indicated by the arrow 22 in Fig. 1, the control lever 74 is pivoted about the Y axis 90, as indicated by the arrow 92 in Fig. 3. Thus, when the aerial platform 12 is to be raised, the control lever 74 is pivoted in a counterclockwise direction (as viewed in Fig. 3) about the Y axis 90. When the platform 12 is to be lowered, the control lever 74 is pivoted in a clockwise direction about the Y axis 90. Pivotal movement of the control lever 74 about the Y axis 90 actuates the Y axis optical attentuator 78 to provide a control signal to the microprocessor 30 (Fig. 2).

When the aerial platform 12 is to be moved to either the right or left as indicated by the arrow 26 in Fig. 1, the control lever 74 is rotated about its central axis 96 in the manner indicated by the arrow 98 in Fig. 3. Thus, when the aerial platform 12 is to be moved sideways to the right (as viewed in Fig. 1), the control lever 74 is rotated in a counterclockwise direction about its axis 96. When the platform 12 is to be moved sideways to the left (as viewed in Fig. 1), the control lever 74 is rotated in a clockwise direction about its axis 96.

Rotation of the control lever 74 about the axis 96 actuates a Z axis optical attentuator 80 to provide a control signal to the microprocessor 30.

The transmit optical fibers 36, 38 and 40 (Fig. 2) are each divided into a pair of optical fibers at the attentuators 76, 78 and 80. Thus, the optical fiber 36 is connected to a pair of optical fibers 104 and 106 by a two-way optical coupler 107 at the X axis attentuator 76. The optical fiber 104 is connected with the return fiber 50 through a three-way optical coupler 108. Similarly, the optical fiber 106 is connected with the return fiber 52 through a second three-way optical coupler 110.

The transmit optical fiber 38 is connected with a pair of optical fibers 112 and 114 by a two-way optical coupler 115 at the Y-axis attenuator 78. The optical fibers 112 and 114 are connected with the return optical fibers 50 and 52 by the three-way couplers 108 and 110. The optical fiber 40 is connected with a pair of optical fibers 116 and 118 by a two-way optical coupler 119. The optical fibers 116 and 118 are connected with the return optical fibers 50 and 52.

Actuation of the control lever 74 causes an optical attenuator 76, 78 or 80 to deform one optical fiber of the pair of optical fibers associated with the optical attentuator. Deformation of an optical fiber impedes the transmission of light through the deformed optical fiber to the microprocessor 30. Specifically, the optical fiber is deformed or bent such that light rays being conducted through the fiber strike the interface between the core of the fiber and the cladding of the fiber at an angle that exceeds the "critical angle" of the fiber. The rays pass through the interface, rather than being reflected at the interface, thereby diminishing or attenuating the light being conducted or transmitted through the fiber.

The microprocessor 30 compares the intensity of the light transmitted through the return optical fiber 50 with the intensity of the light transmitted through the return optical fiber 52. The microprocessor 30 opens a control valve 60, 62 or 64 to an extent which corresponds to the reduction in the intensity of the light transmitted through one of the return optical fibers 50 and 52 due to deformation of one optical fiber in the pairs of optical fibers at the X, Y and Z axis attenuators 76, 78 and 80. The greater the extent to which one of the control valves 60, 62 or 64 is opened, the greater the speed at which an associated motor 66, 68 or 70 is operated to perform an aerial platform positioning function.

Assuming that the control lever 74 is pivoted in a counterclockwise direction about the X axis 84 to effect backward movement of the aerial platform 12, the optical attenuator 76 deforms the optical fiber 106 to reduce the intensity of the light transmitted to the microprocessor 30. The microprocessor 30 compares the intensity of the light signal transmitted through the deformed optical fiber 106 with the intensity of the light signal transmitted through the undeformed optical fiber 104 to determine the extent of movement of the control lever 74 about the X axis 84. The microprocessor 30 then opens the valve 60 from an initial or neutral condition to operate the hydraulic motor 66 at a speed which corresponds to the extent to which the intensity of the light signal transmitted through the deformed optical fiber 106 was reduced relative to the intensity of the light signal in the undeformed optical fiber 104.

Similarly, upon pivotal movement of the control lever 74 in a clockwise direction (as viewed in Fig. 3) about the X axis 84 to effect forward movement of the aerial platform 12, the X axis optical attenuator 76 deforms optical fiber 104. Deformation of the optical fiber 104 results in a reduction in the intensity of the signal transmitted through the optical fiber 104 relative to the intensity of the signal transmitted through the undeformed optical fiber 106. Upon determining the extent of the reduction in intensity of the signal conducted through the optical fiber 104, the microprocessor 30 opens the control valve 60 to a corresponding extent to cause the motor 66 to move the aerial platform 12 forward at a speed which corresponds to the extent of movement of the control lever 74.

When the control lever 74 is pivoted in either a clockwise or counterclockwise direction about the Y axis 90, the optical attentuator 78 deforms one of the optical fibers 112 or 114. This results in the microprocessor 30 opening the control valve 62 to an extent corresponding to the reduction in the intensity of the signal transmitted through the deformed optical fiber. The motor 68 is then actuated to either raise or lower the aerial platform 12 at a speed which corresponds to the extent of movement of the control lever 74.

Similarly, rotation of the control lever 74 about its central axis 84 deforms one of the optical fibers 116 or 118 to reduce the intensity of the light transmitted to the microprocessor 30 through the deformed optical fiber. The microprocessor 30 then opens the control valve 64 to an extent which corresponds to the reduction in intensity of the signal transmitted through the deformed optical fiber. This results in the motor 70 being actuated to move the aerial platform to either the right or the left at a speed which corresponds to the extent of rotation of the control lever 74 about the axis 96.

The microprocessor 30 (Fig. 2) time division multiplexes the light signals transmitted over the optical fibers 36, 38 and 40 so that, at any given instant, only one of the optical attenuators 76, 78 or 80 is receiving light through the transmit optical fibers. This enables a single pair of return optical fibers 50 and 52 to be used to conduct the light signals from the three pairs of optical fibers 104 and 106, 112 and 114, and 116 and 118.

The time division multiplexing feature could be eliminated, however, and six optical fibers could be used as return fibers in the fiber optic cable 34.

Although the foregoing description has described the optical attenuators 76, 78 and 80 as being sequentially actuated, two or more of the optical attenuators could be simultaneously actuated if desired. For example, the control lever 74 could be simultaneously pivoted in a counterclockwise direction about the X axis 84 and pivoted in a clockwise direction about the Y axis 90 to move the aerial platform 12 backward and down. This would result in the optical fiber 106 in the X axis attenuator and the optical fiber 112 in the Y axis attenuator being simultaneously deformed. The microprocessor 30 would then actuate the control valves 60 and 62 to operate the motors 66 and 68 to move the aerial platform 12 backward and down.

Optical Attenuator

The X, Y and Z axis optical attenuators 76, 78 and 80 have the same general construction and mode of operation. The attenuators 76, 78 and 80 are each operable to deform one optical fiber of a pair of optical fibers upon actuation of the attenuator. As an optical fiber is deformed, the intensity of the signal transmitted through the deformed optical fiber is reduced relative to the intensity of the signal transmitted through the undeformed optical fiber of the pair of optical fibers. The microprocessor 30 actuates one of the control valves 60, 62 or 64 to operate one of the motors 66, 68 or 70 in response to the decrease in intensity of the signal transmitted through the deformed optical fiber.

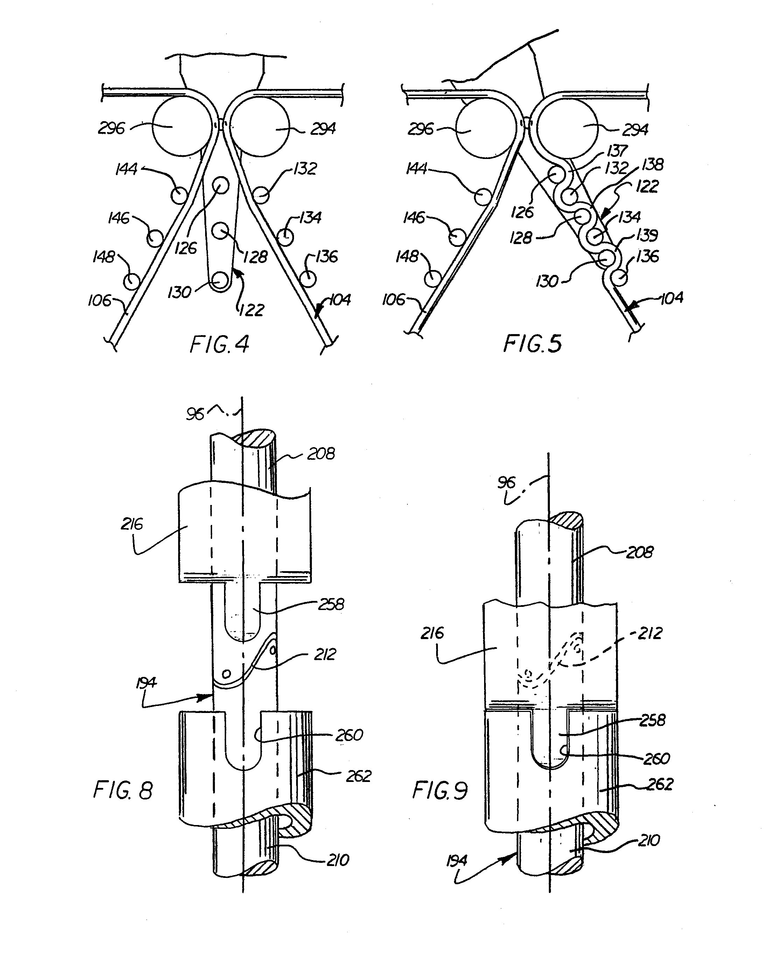

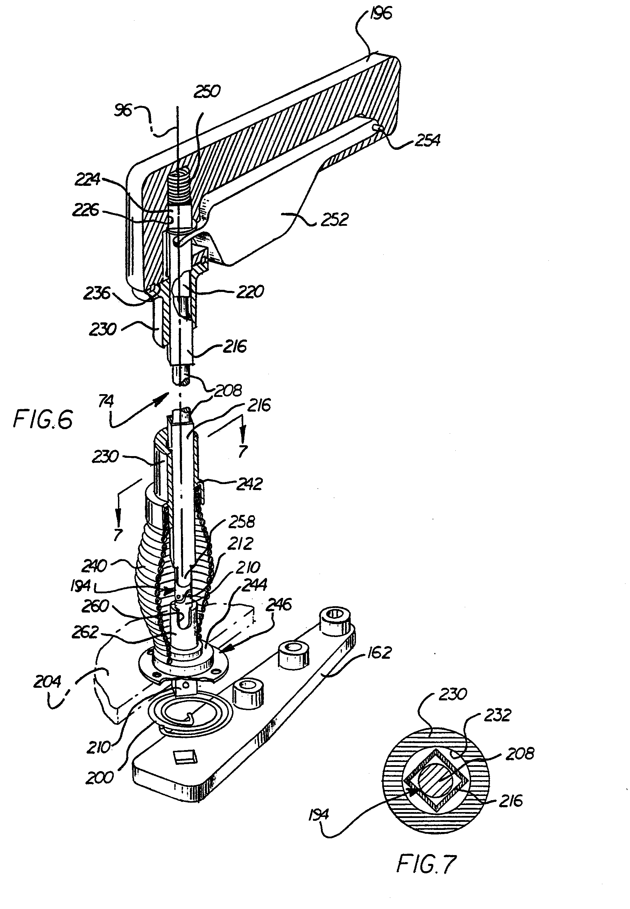

The X axis attenuator 76 includes an attenuator arm 122 (Fig. 3) which is pivotal about the X axis 84 upon movement of the control lever 74 in one of the directions indicated by the arrow 86. When the control lever 74 is in the initial position illustrated in Fig. 3, the arm 122 is positioned midway between the optical fibers 104 and 106 (Fig. 4). Both of the optical fibers 104 and 106 are undeformed and light signals of equal intensity are transmitted through the fibers to the microprocessor 30.

Upon pivotal movement of the control lever 74 in a clockwise direction (as viewed in Fig. 3) about the X axis 84, the control arm 122 pivots toward the optical fiber 104. As the control arm 122 approaches the optical fiber 104, one or more of the rollers 126, 128 and 130 (Figs. 4 and 5) on the control arm cooperate with stationary rollers 132, 134 and 136 to deform the optical fiber 104. The extent to which the optical fiber 104 is deformed corresponds to the arcuate distance through which the control lever 74 and attenuator arm 122 are pivoted.

As the attenuator arm 122 moves toward the optical fiber 104, the movable roller 126 (Fig. 4) on the arm cooperates with a stationary roller 132 to form an initial bend 137 (Fig. 5) in the optical fiber 104. As light is transmitted along the bend 137, some of the light rays escape from the fiber and the intensity of the light in the fiber is decreased.

Further movement of the arm 122 toward the optical fiber 104 results in the movable roller 128 cooperating with the two stationary rollers 132 and 134 to form a second bend 138 in the the optical fiber 104. Forming the second bend in the optical fiber 104 further reduces the intensity of the light signal transmitted to the microprocessor 30.

Upon pivotal movement of the control lever 74 about the X axis 84 to the maximum extent possible, the movable roller 130 cooperates with the rollers 134 and 136 to form a third bend 139 in the optical fiber 104 (Fig. 5). Forming the third bend 139 in the optical fiber 104 further reduces the intensity of the light signal transmitted to the microprocessor 30. Additional rollers could be provided on the attenuator arm 122 to cooperate with additional stationary rollers to form additional bends in the optical fiber 104 if desired.

As the control lever 74 is return from a fully actuated position back toward the initial or neutral position shown in Fig. 3, the attenuator arm 122 moves from the fully actuated position shown in Fig. 5 back toward the initial position shown in Fig. 4. As the attenuator arm moves back toward the initial position (Fig. 4), the optical fiber 104 is released. A spring assembly 140 (Fig. 3) straightens the optical fiber 104 as it is released by the rollers 126-136. Straightening the optical fiber 104 increases the intensity of the light signal transmitted to the microprocessor 30.

The spring assembly 140 includes a coil spring (not shown) which grips the optical fiber 104 and is stretched as the optical fiber is deformed. As the attenuator arm rollers 126, 128 and 130 release the optical fiber 104, the coil spring retracts and pulls the bends out of the optical fiber 104.

Upon movement of the control lever 74 in a counterclockwise direction (as viewed in Fig. 3) about the X axis 84 to effect backward movement of the aerial platform 12, the attenuator arm 122 moves toward the optical fiber 106. As the attentuator arm 122 moves toward the optical fiber 106, the movable rollers 126, 128 and 130 on the attenuator arm cooperate with stationary rollers 144, 146 and 148 to deform the optical fiber 106. A second return spring assembly 150 (Fig. 3) is connected with the optical fiber 106 to straighten the optical fiber as the control lever 74 moves back toward the initial position and the attenuator arm 122 moves away from the optical fiber.

The Y axis attenuator assembly 78 has the same construction and mode of operation as the X axis attenuator assembly 76.  Thus, the Y axis attenuator assembly 78 includes an attenuator arm 154 (Fig. 3) having rollers which cooperate with stationary rollers adjacent to the optical fibers 112 and 114 to deform one of the optical fibers 112 or 114 upon movement of the control lever about the Y axis.  Return spring assemblies 156 and 158 are connected with the optical fibers 112 and 114. The return spring assemblies 156 and 158 straighten the optical fibers 112 and 114 when they are released by the attenuator arm 154.

The Z axis optical attenuator 80 (Fig. 3) is actuated upon rotation of the control lever 74 about its central axis 96.  The Z axis attenuator assembly 80 includes an attenuator arm 162 which rotates about a vertical axis which is coincident with the axis 96 when the control lever 74 is in the initial position shown in Fig. 3.  The construction of the Z axis attenuator is the same as the construction of the X and Y axis attenuators 76 and 78. Thus, movable rollers on the attenuator arm 152 cooperate with the stationary rollers to deform the optical fiber 116 or 118 upon rotation of the control lever 74 about its central axis 96.  Return spring assemblies 164 and 166 are connected with the optical fibers 116 and 118 to straighten them when they are released by the attenuator arm 162.

0126223

## Transmission of Control Lever Motion

When the control lever 74 is pivoted about either the X or Y axis, the motion of the control lever is transmitted to either the X axis optical attenuator 76 or the Y axis optical attenuator 78 to move one of the attenuator arms 122 or 154. Motion is transmitted from the control lever 74 to the X axis optical attenuator 76 by a yoke 172 (Fig. 3). Motion is transmitted from the control lever 74 to the Y axis optical attenuator 78 by a yoke 174.

The X axis yoke 172 is formed of a polymeric material and has a one-piece molded construction. The generally U-shaped X axis yoke 172 has a slot 178 in the bight of the yoke. The yoke 172 is pivotally mounted on four stub shafts 182 disposed on the X axis 84. Two of the stub shafts 182 are mounted on opposite sides of an end portion 183 of the yoke 172. A pair of stub shafts 182 are also mounted on opposite sides of an end portion 184 of the yoke 172.

Upon pivotal movement of the control lever 74 about the X axis 84, the control lever applies a force against an elongated side of the slot 178 in the yoke 172. This pivots the yoke 172 and the attenuator arm 122 about the X axis 84. Pivotal movement of the yoke 172 results in one of the optical fibers 104 or 106 being deformed to an extent which corresponds to the arcuate distance through which the control lever 74 and yoke 172 move about the X axis 84.

The Y axis yoke 174 has the same construction as the X axis yoke 172. Thus, the generally U-shaped Y axis yoke 174 is formed as one piece with the attenuator arm 154. The Y axis yoke 174 is pivotally supported by four stub shafts 188 (only one of which is shown in Fig. 3) for pivotal movement about the Y axis 90. The Y axis yoke 174 has an elongated slot 190 through which the control lever 74 extends. Upon pivotal movement of the control lever 74 about the Y axis 90, the yoke 174 is pivoted to move the attenuator arm 154 and deform one of the optical fibers 112 or 114.

The Z axis optical attenuator 80 is actuated by rotary motion transmitted by the control lever 74. A center shaft 194 (Figs. 3 and 6) extends between a handle 196 and the Z axis attenuator arm 162. Rotation of the handle 196 about the central axis 96 of the control lever 74 rotates the center shaft 194 and the attenuator arm 162 to deform one of the optical fibers 116 or 118. The handle 196 is returned to its neutral or initial position about the Z axis by a return spring 200 which is connected with the shaft 194 and housing wall 204. Thus, upon rotation of the shaft 194 in a counterclockwise direction (as viewed from above in Fig. 3), the attenuator arm 162 deforms the optical fiber 116 and the spiral spring 200 is wound tighter around the shaft 194. When the control handle 196 is released, the coil spring 200 rotates the handle 196 in a clockwise direction back to the initial position shown in Fig. 3. Similarly, when the handle 196 is rotated in a clockwise direction from the initial position shown in Fig. 3, the attenuator arm 162 moves to deform the optical fiber 118 and the spiral spring 200 is unwound from the shaft 194. Upon releasing of the handle 196, the spring 200 rotates the handle back to its initial position.

Control Lever Construction

The control lever 74 includes three shafts which are disposed in a coaxial relationship with each other. The center or main shaft 194 has an upper section 208 (Fig. 6) which is connected with the handle 196 for rotation about the axis 96. The shaft 194 has a lower section 210 which is connected to the Z axis attenuator arm 162 for rotation about a vertical axis which is coincident with the axis 96 in Fig. 6. A universal joint 212 connects the upper shaft section 208 with the lower shaft section 210. The universal joint 212 allows the shaft 194 to bend so that the control lever 74 can pivot about either the X axis 84 or the Y axis 90 (see Fig. 3). When the control lever 74 is pivoted about either the X axis 84 or the Y axis 90, the upper section 208 and axis 96 (Fig. 6) are skewed relative to the lower section 210.

A slidable interlock shaft 216 surrounds the upper shaft section 208 and has a rectangular cross section (see Fig. 7). An upper end portion 220 (Fig. 6) of the upper shaft section 208 has a corresponding rectangular cross section which prevents rotation of the shaft section 208 relative to the interlock shaft 216. An upper end portion 224 of the tubular interlock shaft 216 can be slidably received in a rectangular opening 226 in the handle 196 to hold both the interlock shaft 216 and the shaft section 208 against rotation relative to the handle 196. Therefore, when the upper portion 224 is received in the opening 226 and the handle 196 is rotated about the axis 96, the interlock shaft 216 and central shaft 194 are rotated together to transmit rotary motion to the Z axis attenuator arm 162.

An outer shaft 230 circumscribes the interlock shaft 216 and has a cylindrical inner side surface 232 (see Fig. 7) which allows the interlock shaft 216 to rotate relative to the outer shaft 230. Therefore, upon rotation of the handle 196 about the axis 96, the handle rotates relative to the outer shaft 230 at a swivel joint 236 (Fig. 6) between an upper end surface of the outer shaft 230 and a lower surface of the handle 196.

The lower end portion of the shaft 230 is connected with an X and Y axis return spring 240 (Fig. 6). The X and Y axis return spring 240 is fixed to a lower end portion 242 of the outer shaft 230 and to a

-23-                    0126223

stationary housing 244 of a swivel joint 246.  The swivel joint 246 supports the relatively short shaft section 210 for rotation relative to the housing wall about a vertical axis.  The swivel joint 246 also holds the shaft 194 against axial movement relative to the housing wall 204.

When the upper end portion 224 of the interlock shaft 216 is received in the opening 226, the upper section 208 of the central shaft 194 can pivot at the universal joint 212 to permit the control lever 74 to pivot about either the X or Y axis.  Such pivotal movement deflects the return spring 240.  Rotational movement of the handle about the axis 96 can still be transmitted through the universal joint 212 to rotate the Z axis attenuator arm 162 about a vertical axis which is skewed relative to the axis 96.  When the control lever 74 is released after being pivoted about either the X or Y axis, the spring 240 returns it to the initial position shown in Figs. 3 and 6.  It should be noted that only a single return spring 240 is required to return the control lever 74 to its initial position after pivotal movement about either the X axis 84 or the Y axis 90.

The interlock shaft 216 is axially movable between a release position shown in Figs. 6 and 8 and a locking position shown in Fig. 9.  When the interlock shaft 216 is in the release position of Figs. 6 and 8, the upper end portion 224 of the interlock shaft is received in the opening 226 and the control lever 74 can be pivoted at the universal joint 212 about either the X or Y axis. In addition, the control lever 74 can be rotated about the axis 96.

The interlock shaft 216 is movable from the locking position (Fig. 9) to the release position (Figs. 6 and 8) against the influence of a biasing spring 250 (Fig. 6) by manually gripping the handle 196 and pivoting an actuator lever 252 upwardly about a pivot pin 254. Upward movement of the actuator lever 252 slides the interlock shaft 216 upwardly into opening 126 and compresses the biasing spring 250.

When the handle 196 is released, the biasing spring 250 moves the interlock shaft 216 axially downwardly. Downward movement of the interlock shaft 216 telescopes the shaft over the universal joint 212 and moves a pair of axially extending tangs 258 disposed on opposite sides of the interlock shaft 216 downwardly into engagement with slots 260 formed in a stationary collar 262 (only one of the interlock tangs 258 and slots 260 is shown in the drawings). Engagement of the interlock tangs 258 with the grooves in the collar 262 holds the interlock shaft 216 and the central shaft 194 against rotation about the central axis 96 of the control lever 74. The engagement of the tangs 258 and slots 260 also prevents the central shaft 194 of the control lever 74 from being pivoted about the X and Y axes at the universal joint 212. Therefore, movement of the interlock shaft 216 from the release position of Fig. 8 to the locking position of Fig. 9 locks the control lever 74 against rotational movement about the axis 96 and against pivotal movement about either the X or the Y axes.

The purpose of the interlock shaft release mechanism, including the actuator lever 252, is to permit the aerial platform to be manipulated from the ground in the event operator 20 is injured. If the operator receives an electric shock and loses consciousness, for example, he or she will release his or her grip on the lever 252. The control level 74 will then return to its neutral position and the platform will no longer move in response to movement of the lever 74. The valves 60, 62 and 64 may then be opened normally, for example, to drain hydraulic fluid from motors 66, 68 and 70 and return the platform 12 to the ground.

## Control Assembly Housing

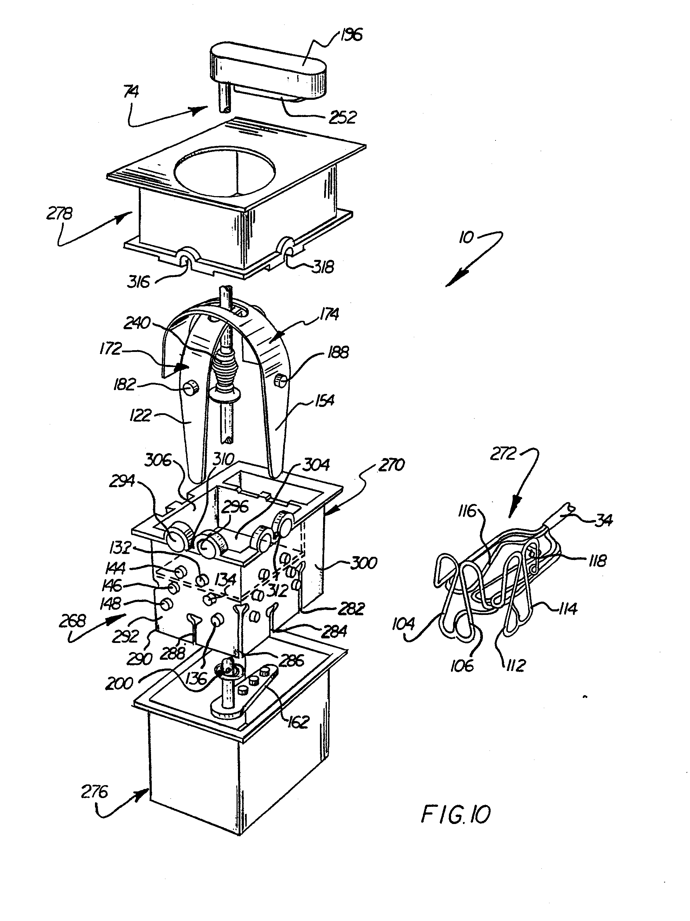

A housing 268 is illustrated in Fig. 10. The control assembly housing 268 includes an inner housing 270 upon which a cable harness 272 and the X and Y axis yokes 172 and 174 are mounted. The inner housing 270 is received in an outer housing section 276. A cover section 278 is connected with the lower housing section 276 and inner housing section 270.

When the control assembly 10 is to be assembled, the cable harness 272 is received in slots 282-290 formed in side walls of the inner housing section 270. The optical fibers 104 and 106 associated with the X axis attenuator 76 are positioned on an outer side wall 292 of the inner housing 270 with the optical fiber 104 adjacent to the stationary rollers 144-148 and the optical fiber 106 adjacent to the stationary rollers 132-136. The lower end portions of the optical fibers 104 and 106 extend through the slot 288 in the end wall 292. After passing around positioning rollers 294 and 296 at the upper end of the end wall 292, the optical fibers 104 and 106 extend through the slots 286 and 290 in the inner housing 270.

The optical fibers 112 and 114 associated with the Y axis attentuator 78 are mounted on an outer side wall 300. The optical fibers 116 and 118 associated with the Z axis attenuator 80 are mounted on the bottom of a wall 304 in the inner housing 270. The optical fiber 118 extends inwardly through the slot 284 formed in the side wall 300 and the housing of the optical fiber 116 extends through a corresponding slot formed in the opposite side wall 306 of the housing. The stationary rollers of the Z axis attenuator 80 extend downwardly from the bottom surface of the cross wall 304.

Once the cable harness 272 has been positioned relative to the inner housing 270, the X and Y axis yokes 172 and 174 and attenuator arms 122 and 154 are positioned on the outside of the inner housing 270. The X and Y axis yokes 172 and 174 are pivotally supported by the stub shafts 182 and 188. The inwardly projecting stub shafts are received in grooves 310 and 312 formed in the inner housing 270. The outwardly projecting stub shafts are received in grooves 316 and 318 formed in the cover section 278.

Although it is preferred to have a pair of optical fibers for each of the attenuators 76, 78 and 80, a single optical fiber may be provided for each attenuator. This single optical fiber would be partially deformed when the control lever 74 is in the initial position. Upon movement of the control lever 74 in one direction from the initial position, the extent of deformation of the optical fiber would be increased. Upon movement of the control lever 74 in the opposite direction, the extent of deformation of the optical fiber would be decreased.

### Summary

The present invention provides a new and improved control apparatus 10 which, although it may be used in many different environments, is particularly well adapted to control the movement of an aerial platform 12. The control apparatus includes a plurality of optical attenuators 76, 78 and 80 which are actuated by movement of a single control member 74. The control member 74 is movable about X, Y and Z axes 84, 90 and 96.

Each of the optical attenuators 76, 78 and 80 is operable to deform one one of a pair of optical fibers. Thus, the X axis attenuator 76 includes the optical fibers 104 and 106. The Y axis attenuator 78 is operable to deform one of the optical fibers 112 and 114. The Z axis attentuator 80 is operable to deform one of the optical fibers 116 and 118.

Upon movement of the control member 74 about one of the axes 84, 90 or 96, one of the optical attenuators 76, 78 or 80 is actuated to deform one optical fiber of a pair of optical fibers. Deformation of an optical fiber attentuates the light being transmitted through the optical fiber to provide a control signal which is used to effect the desired movement of the aerial platform 12.

A single interlock shaft 216 is movable between the release position of Fig. 8 and the engaged position of Fig. 9. When the interlock shaft 216 is in the release position, the control member 74 is pivotal about the X and Y axes 84 and 90 and is rotatable about the Z axis 96 (Fig. 3). When interlock shaft 216 is in the engaged position of Fig. 9, the control member 74 is locked against pivotal and rotational movement.

0126223

Having described one specific preferred embodiment of the invention, the following is claimed:

1. An apparatus comprising

a manually actuatable control member movable about a plurality of axes extending transversely of each other,

a plurality of optical fibers for transmitting light, and

attenuator means connected with said control member for impeding the transmission of light through a first one of said optical fibers upon movement of said control member about a first one of the axes and for impeding the transmission of light through a second one of said optical fibers upon movement of said control member about a second one of the axes.

2. An apparatus as set forth in claim 1 wherein said atenuator means includes means for varying the extent to which the transmission of light through said first optical fiber is impeded as a function of the extent of movement of said control member about the first axis and means for varying the extent to which the transmission of light through said second optical fiber is impeded as a function of the extent of movement of said control member about the second axis.

3. An apparatus as set forth in claim 1 wherein said attenuator means includes means for deforming said first optical fiber upon movement of said control member about the first axis and means for deforming said second optical fiber upon movement of said control member about the second axis, and means for deforming a third one of said optical fibers upon rotation of said control member about a third one of the axes.

4. An apparatus as set forth in claim 1 wherein said attenuator means includes first means for bending said first optical fiber upon movement of said control member in a first direction about the first axis to a first actuated position and for decreasing the extent to which said first optical fiber is bent upon movement of said control member about the first axis in a second direction from the first actuated position, and second means for bending said second optical fiber upon movement of said control member in a third direction about the second axis to a second actuated position and for decreasing the extent to which said second optical fiber is bent upon movement of said control member about the second axis in a fourth direction from the second actuated position, said first means including first spring means for urging said first optical fiber from a bent configuration toward a straight configuration, said second means including second spring means for urging said second optical fiber from a bent configuration toward a straight configuration.

5. An apparatus comprising

a control member movable about a plurality of axes that extend transversely of each other from an initial position to any one of a plurality of actuated positions,

a plurality of pairs of optical fibers for transmitting light,

first attenuator means for deforming a first optical fiber in a first pair of optical fibers upon movement of said control member from the initial position in a first direction about a first one of the plurality of axes and for deforming a second optical fiber in the first pair of optical fibers upon movement of said control member from the initial position in a second direction about the first one of the plurality of axes, and

second attenuator means for deforming a first optical fiber in a second pair of optical fibers upon movement of said control member from the initial position in a first direction about a second one of the plurality of axes and for deforming a second optical fiber in the second pair of optical fibers upon movement of said control member from the initial position in a second direction about the second one of the plurality of axes.

6. An apparatus as set forth in claim 5 wherein said control member is rotatable about a third axis of the plurality of axes, said apparatus further including third attenuator means for deforming a first optical fiber in a third pair of optical fibers upon rotation of said control member from the initial position in a first direction about the third axis and for deforming a second optical fiber in the third pair of optical fibers upon rotation of said control member from the initial position in a second direction about the third axis.

7. An apparatus as set forth in claim 6 further including locking means for locking said control member against movement from the initial position about the plurality of axes, and actuator means for actuating said locking means to release said control member for movement about the plurality of axes.

8. An apparatus comprising

a control member movable in first and second directions from an initial position,

a light source,

a pair of optical fibers for transmitting light from said light source,

means for comparing the intensity of the light transmitted by said optical fibers, and

attenuator means for deforming a first optical fiber in said pair of optical fibers upon movement of said control member in the first direction from the initial position to reduce the intensity of the light transmitted by the first optical fiber and for deforming a second optical fiber in said pair of optical fibers upon movement of said control member in the second direction from the initial position to reduce the intensity of the light transmitted by the second optical fiber.

9. An apparatus as set forth in claim 8 wherein said attenuator means includes means for being said first optical fiber upon movement of the control member in the first direction from the initial position, means for bending said second optical fiber upon movement of the control member in the second direction from the initial position, and means for removing bends from said first and second optical fibers upon movement of control member to the initial position.

10. An apparatus comprising

a manually actuatable control member,

joint means connected with said control member for enabling said control member to pivot from an initial position about first and second axes extending perpendicular to each other to any one of a plurality of actuated positions and for enabling said control member to rotate about a third axis extending longitudinally through said control member and perpendicular to the first and second axes, and

a locking member movable between a release position and a locking position holding said control member against movement about said first, second and third axes.

11. An apparatus as set forth in claim 10 said joint means including a universal joint connected with one end portion of said control member, said locking member being movable axially along said control member between the release position in which said locking member is spaced from said universal joint and the locking position in which said locking member holds components of said universal joint against relative movement.

1/5

0126223

FIG.1

FIG.2

FIG.3

FIG.4

FIG.5

FIG. 8

FIG.9

0126223

FIG.6

FIG.7

0126223

FIG.10